(19) Europäisches Patentamt

European Patent Office

Office européen des brevets

(11) **EP 4 607 146 A1**

(12) **EUROPEAN PATENT APPLICATION**

(43) Date of publication:
27.08.2025 Bulletin 2025/35

(21) Application number: 24159088.4

(22) Date of filing: **22.02.2024**

(51) International Patent Classification (IPC):
*G01C 15/00* (2006.01)   *G01B 11/27* (2006.01)

(52) Cooperative Patent Classification (CPC):
**G01C 15/002; G01B 11/272**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Trimble Europe B.V.**
**5683 CC Best (NL)**

(72) Inventors:
• **GRAESSER, Christian**
**5683 CC Best (NL)**
• **ZEIN EDDINE, Rachid**
**5683 CC Best (NL)**

(74) Representative: **AWA Sweden AB**
**Box 45086**
**104 30 Stockholm (SE)**

(54) **SURVEYING POLE WITH COMPENSATED TILT MEASUREMENT AND METHOD IMPLEMENTED IN A SURVEYING POLE**

(57) A surveying pole comprising: a rod extending between a first end and a second end, wherein a top unit including a tilt sensor is mounted at one end and a pointing tip is located at the opposite end. A light emitting unit is configured to send a collimated light beam for propagation from one of said first and second ends to the other end. A detector arrangement is configured to detect a position of said collimated light beam at said other end. A processor is configured to compare the detected position with a reference position and determine a deviation error representative of a bending of said rod, wherein the processor is further configured to obtain a position of the pointing tip using the determined deviation error, wherein said reference position corresponds to a position of the collimated light beam at the other end for a known bending of said rod.

Fig. 3

EP 4 607 146 A1

# Description

## Technical field

The present inventive concept relates to a surveying pole. More specifically, it relates to a surveying pole providing compensation of a measurement of a tilt sensor unit based on a determined deviation error representative of a bending.

## Background

Surveying involves the determination of three-dimensional points to map and create a model of the terrain or structure being surveyed. For this purpose, surveying poles having a target and/or other piece of surveying equipment, such as a GNSS (Global Navigation Satellite System) antenna, may be used. Typically, such a surveying pole comprises a rod with the target and/or GNSS antenna arranged at one end of the rod and a pointing tip arranged at the other end of the rod. In use, the pointing tip is placed in contact with a measurement point, or point of interest. A surveying pole with a target is typically used in cooperation with a geodetic instrument, such as a geodetic scanner, a theodolite or a total station, to determine a distance and angle between the target and the known position of the geodetic instrument. A surveying pole with a GNSS antenna may obtain its own position from signals received by satellites of the GNSS system. Thus, the position of the target and/or the GNSS antenna is obtained. The position of the measurement point is then obtained based on the length of the surveying pole, assuming a vertical pole. The tilt and azimuth of the surveying pole may also be taken into account, allowing measures to be taken even when the surveying pole is not vertical during the measurement. This in turns allows for a quicker setup, and makes measurement of otherwise inaccessible points possible, e.g., close to a wall, under an overhang, etc. At some degrees of tilt and depending on the weight of the target, as well as on the dimensions and material/mechanical properties of the rod of the surveying pole, bending of the rod may occur. In case of rod bending, the relation between the position of the target or GNSS antenna and the measurement point may not be accurately known. In many applications, the rod bending error may be negligible. However, improved accuracy is always desirable.

## Summary

In view of the above, it is an object of the present disclosure to provide an improved surveying pole.

According to a first aspect of the present inventive concept, there is provided
a surveying pole comprising:

    a rod extending between a first end and a second end, wherein a top unit including a tilt sensor is mounted at one of said first and second ends, and a pointing tip is located at the opposite end relative to the top unit,

    a light emitting unit configured to send a collimated light beam for propagation from one of said first and second ends to the other end,

    a detector arrangement configured to detect a position of said collimated light beam at said other end; and

a processor configured to compare the detected position with a reference position and determine a deviation error representative of a bending of said rod based on said comparison, wherein the processor is further configured to obtain a position of the pointing tip of the surveying pole using the determined deviation error, wherein said reference position corresponds to a position of the collimated light beam at the other end for a known bending of said rod.

The processor may further be configured to compensate a measurement of said tilt sensor using the determined deviation error.

A surveying pole according to the present inventive concept has at least the advantage that it may improve the accuracy of a measurement made by, or in cooperation with, the surveying pole. It may allow measurements to be taken with a higher degree of tilt, with maintained or even improved accuracy. This makes the surveying pole more versatile, as it may allow measurements to be performed in previously difficult to access locations. It may increase the speed at which measurements may be performed.

By the present inventive concept, greater freedom in design of the surveying pole is also provided. For example, the surveying pole may be longer. Further, lighter material may be used, even if the stiffness of the surveying pole is reduced.

Additionally, the obtained position of the pointing tip of the surveying pole and/or the compensation of the measurement of the tilt sensor provided by the present inventive concept is based on the real or current influence of the bending of the rod. In other words, the present inventive concept provides an accurate position of the pointing tip of the surveying pole and/or accurate compensation of the measurement of the tilt sensor independently of the wear and tear of the rod and/or intersections of rod sections (e.g., in case of a telescopic rod). Similarly, additional elements, such as for example a field control unit, may be added to the rod (thus adding weight and influencing the bending) with maintained accuracy of the obtained position of the pointing tip and/or compensation of the measurement of the tilt sensor.

The top unit and the pointing tip are at opposite ends of the rod, i.e., the top unit may be mounted at the first end and the pointing tip located at the second end, or the top unit may be mounted at the second end and the pointing tip located at the first end. Thus, "the other end" in the expression "a light emitting unit configured to send a collimated light beam for propagation from one of said first and second ends to the other end" may the same as the "opposite end" at which the pointing tip is located, or it may be the same end at which the top unit is mounted.

In at least an example embodiment, the detector arrangement includes an imaging device arranged within said rod at said other end, wherein said imaging device is configured to detect the position of said collimated light beam as a position on a pixel array of said imaging device at which said collimated light beam impinges and creates a light spot.

With such a detector arrangement, the position of said collimated light beam at said other end may be detected using a simple imaging device. In particular, no lens is required in such an arrangement. Furthermore, this allows detection of the position of said collimated light beam at said other end in a rod of varying length, i.e., an adjustable rod, such as a telescopic rod.

With such an arrangement, the reference position thus corresponds to a position of the collimated light beam on said pixel array for a known bending.

In at least an example embodiment, the detector arrangement includes an imaging device arranged in proximity of said other end for imaging a light spot created by said collimated light beam on a surface located at said other end, or at a predetermined distance from said other end, wherein said imaging device is configured to detect the position of said collimated light beam as a position of the image of said light spot on a pixel array of said imaging device.

The imaging device may then be arranged at a fixed position relative to said other end. The detector arrangement may further include a lens arrangement for focusing said imaging device on said surface.

This allows for a lens arrangement with a fixed focus, providing for a simple device. As the position of the imaging device is fixed relative to said other end, the rod may be of fixed length, or of varying length.

The light emitting unit and the imaging device may be located at opposite ends of said rod.

In at least an example embodiment, the detector arrangement includes a pattern arranged in said rod at a surface located at said other end, or at a predetermined distance from said other end, and an imaging device arranged to capture at least one image of said pattern with said collimated light beam hitting said pattern, wherein the position of said collimated light beam is detected as a position at which the collimated light beam hits said pattern.

In other words, the position of said collimated light beam is detected as a position relative to the pattern.

In yet other words, the position of said collimated light beam is detected as a position at which the collimated light beam hits said pattern relative to said reference position at which the collimated light beam hits said pattern for said known bending.

The surveying pole may then further include a lens arrangement for focusing said imaging device at said surface.

This provides freedom of positioning of the imaging device.

The pattern and said light emitting unit may be located at opposite ends of said rod.

Said surface and the imaging device may be located at opposite ends of said rod.

Thereby, active elements, such as the light emitting unit and/or the imaging device, and passive elements, such as the surface, to be located at opposite ends. This may provide an advantage in terms of supplying power to the active elements, and/or active elements communicating with other elements such as the processor.

In at least an example embodiment, the detector arrangement includes an imaging device and a reflecting element, wherein the reflecting element is arranged at said other end, or at a predetermined distance from said other end, for reflection of said collimated light beam towards said imaging device arranged to detect the position of the collimated light beam as a position on a pixel array of said imaging device at which the light beam reflected at said reflecting element impinges.

This may provide flexibility in terms of placement of the imaging device. The length of the path of the collimated light beam may be increased, which may improve the accuracy of the measurement.

The imaging device may in principle be a position sensor, a pixel array, or a position sensing diode, PSD.

The reflecting element may be one of a mirror or a retroreflector.

In at least an example embodiment, said collimated light beam propagating from one of said first and second ends to said other end includes a light pattern, wherein the detector arrangement includes an imaging device arranged at said other end and an optical element for imaging said light pattern on a pixel array of said imaging device, wherein the imaging device is configured to detect the position of the collimated light beam as a position of an image of the light pattern on said pixel array.

This may allow a wider light beam to be used. It may provide flexibility in terms of choice of light emitting unit.

The light emitting unit may then include a light source configured to emit light, an optical element providing a light pattern in the light emitted from the light source and an optical element configured to provide said collimated light beam including said light pattern for propagation from one of said first and second ends to said other end.

The light emitting unit may be arranged in said top unit, at said first end or at said second end.

This provides flexibility in terms of design of the surveying pole.

The light emitting unit may be a laser, such as a light emitting transmitter of an electronic measurement device (EDM) arranged within the top unit.

Thus, the light emitting unit may serve several purposes. This may reduce the number of needed components in the surveying pole.

The light emitting unit may be arranged to emit light along a longitudinal axis of said rod when it is unbent.

The surveying pole may further comprise a beam splitter arranged along said longitudinal axis so that an imaging device of said detector arrangement is arranged to detect said collimated light beam from a direction intersecting said longitudinal axis.

This provides flexibility in terms of placement of the detector arrangement and/or components thereof.

The reference position may correspond to a position at which the light beam hits the target for said rod being unbent.

The rod may be a telescopic pole arrangement.

According to a second aspect of the present inventive concept, there is provided a method implemented in a surveying pole comprising a rod extending between a first end and a second end, wherein a top unit including a tilt sensor is mounted at one of said first and second ends, and a pointing tip is located at the other end, said method comprising:

sending a collimated light beam for propagation from one of said first and second ends to the other end;

detecting a position of said collimated light beam at said other end;

comparing the detected position with a reference position;

determining a deviation error representative of a bending of said rod based on said comparison; and

obtaining a position of the pointing tip of the surveying pole using the determined deviation error, wherein said reference position corresponds to a position of the collimated light beam at the other end for a known bending of said rod.

The method may comprise compensating a measurement of said tilt sensor.

The method according to the second aspect may suitably be implemented in a surveying pole according to the first aspect. Accordingly, any advantage described herein applies equally to the surveying pole of the first aspect and to the method of the second aspect, when implemented in such a surveying pole.

## Brief description of the drawings

Aspects of the present inventive concept, including its particular features and further advantages, will now be described with reference to the drawings, in which:

| | |
|---|---|
| Figure 1 | illustrates a typical scene of a surveying pole in use, |
| Figure 2 | illustrates a scene in which a surveying pole is used in a tilted orientation, |
| Figure 3 | illustrates a surveying pole with bending on the rod, |
| Figure 4a | schematically illustrates a surveying pole according to the present inventive concept, in an unbent state, |
| Figure 4b | schematically illustrates the position of the collimated light beam for the surveying pole of Fig. 4a, |
| Figure 5a | schematically illustrates the surveying pole of Fig. 4a in a bent state, |
| Figure 5b | schematically illustrates the position of the collimated light beam for the surveying pole of Fig. 5a, |
| Figure 6a | schematically illustrates an embodiment of the surveying pole, |
| Figure 6b | schematically represents a pixel array of a detector arrangement of the surveying pole of Fig. 6a, |
| Figure 7a | schematically illustrates a further embodiment of the surveying pole, |
| Figure 7b | schematically represents a pixel array of a detector arrangement of the surveying pole of Fig. 7a, |
| Figure 8 | schematically illustrates components of a further embodiment of the surveying pole, |
| Figures 9a-c | are schematic representations of images obtained by the surveying pole of Fig. 8a, |
| Figure 10 | schematically illustrates components of a further embodiment of the surveying pole, |
| Figure 11 | schematically illustrates components of a further embodiment of the surveying pole when in an unbent state, |
| Figure 12 | schematically illustrates the components of Fig. 11 with the surveying pole |

being in a bent state,

Figure 13     schematically illustrates components of a further embodiment of the surveying pole in an unbent state,

Figure 14     schematically illustrates the components of Fig. 13 with the surveying pole in a bent state,

Figure 15     schematically illustrates components of a further embodiment of the surveying pole,

Figure 16     schematically illustrates the geometry of determining the deviation error at the pointing tip, and

Figure 17     is a flow chart of a method according to the present inventive concept.

## Detailed description

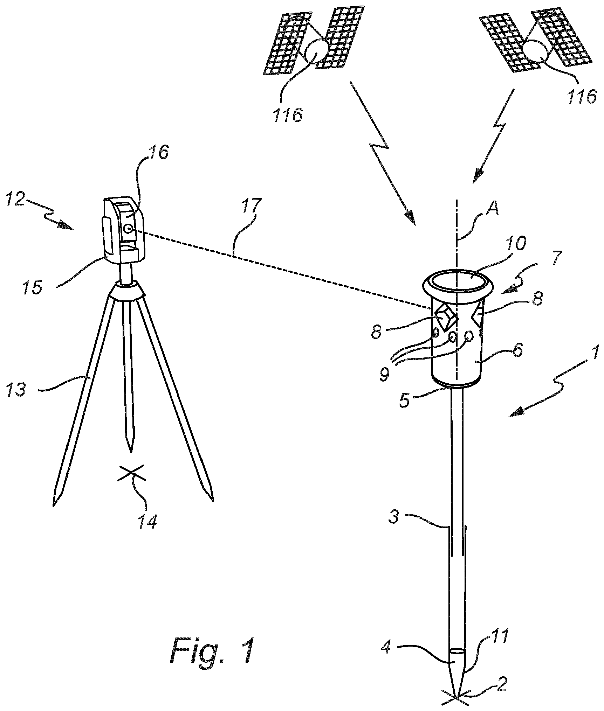

Fig. 1 illustrates a typical scene, in which a surveying pole 1 is used to determine the three-dimensional position of a point of interest 2. The surveying pole 1 comprises a rod 3 extending along a longitudinal axis A between a first end 4 and a second end 5. As illustrated, the rod 3 is a telescopic rod 3 having two sections telescopically arranged to provide height adjustment to the surveying pole 1.

A top unit 6 is mounted on the rod 3 at the second end 5 and extends along the longitudinal axis A. The top unit 6 comprises a positioning device 7, which positioning device 7 may comprise, for example, reflective elements 8, light emitting elements 9, and/or a GNSS (Global Navigation Satellite System) antenna 10.

A pointing tip 11 is mounted at the first end 4 of the rod 3. In use of the surveying pole 1, when making a measurement on a point of interest 2 on the terrain or on a structure, the pointing tip 11 is placed on the point of interest 2. Typically, the surveying pole 1 is held in a vertical position during a measurement.

For determining the position of the point of interest 2, the position of the positioning device 7 must be known.

In the example of Fig. 1, the position of the positioning device 7 may be determined in cooperation with a geodetic instrument, here illustrated as a total station 12 mounted on a tripod 13 and positioned above a point of reference 14. The total station 12 comprises an alidade 15 rotatable about a first axis (not shown) and a center unit 16 mounted on the alidade 15 and itself rotatable about a second axis (not shown). Typically, the total station 12 is set up so that, in use, the first axis is vertical, and the second axis is horizontal. The first and second axis intersect within the center unit 16 such that a sighting axis 17 of the total station 12 is rotatable about the intersection point of the axes. The center unit 16 may comprise one or more measurement devices, such as an electronic distance measurement (EDM) unit. Furthermore, the center unit 16 may comprise one or more sensors, such as a camera and/or a light detector, as well as a control unit for controlling the measurement devices and sensors. The total station 12 is equipped with sensors, such as angle sensors and/or accelerometers or inertial measurement unit (IMU), for determining the orientation of the sighting axis 17. The various devices and sensors of the center unit 16 and total station 12 are not shown in the figure.

The point of reference 14 may have a known position, e.g., in a common reference frame. In order to determine the position of the point of interest 2 in relation to the point of reference 14, the EDM unit of the center unit 16 may for example measure the distance between the positioning device 7 of the surveying pole 1 and the total station 12 based on light emitted towards the positioning device 7 by the EDM unit and reflected back towards the total station 12 by a reflective element 8 of the positioning device 7. The position of the positioning device 7 may then be derived based on the measured distance and the orientation of the sighting axis 17.

Alternatively, or additionally, the GNSS antenna 10, or receiver, may receive positioning data from a GNSS, illustrated by a plurality of satellites 116.

Knowing the position of the positioning device 7, the position of the point of interest 2 may then be derived based on the position of the pointing tip 11 relative to the position of the positioning device 7.

When the surveying pole 1 is in a vertical position, as illustrated in Fig. 1, the position of the point of interest 2 is thus obtained base on the distance between the positioning device 7 and the pointing tip 11, which corresponds to the length of the rod 3 of the surveying pole 1 (taking also into account some fixed lengths of the surveying pole 1, such as the distance between the point of known position in the positioning device 7 and the rod 3, and the length of the pointing tip 11).

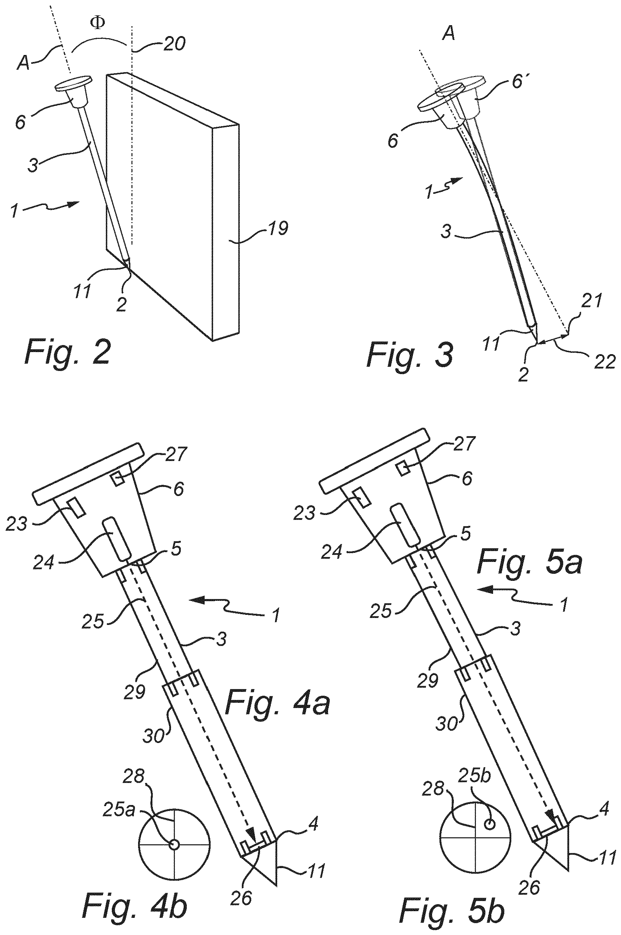

Some surveying poles provide tilt compensation, enabling use even when the surveying pole is not oriented vertically. For example, as illustrated in Fig. 2, it may be desirable to perform a measurement close to an obstacle, such as a wall 19, in which case the surveying pole 1 cannot be held in a vertical position. Instead, the pointing tip 11 is placed at the point of interest 2 close the wall 19, and the surveying pole is held during measurement with a tilt angle Φ, i.e., the longitudinal axis A of the surveying pole 1 is tilted by an angle Φ with respect to a vertical axis 20. Similarly, the surveying pole 1 may for example be used in a tilted position if the point of interest is located under an overhang which is lower than the height of the surveying pole.

When the surveying pole 1 is used while tilted, the position of the point of interest 2 may be determined based of the position of the positioning device 7, the tilt angle Φ, and the tilt direction (not shown in the figure), i.e.,

the azimuth of the tilted surveying pole 1. The tilt angle Φ may be determined by a tilt sensor comprising e.g., one or more accelerometers and/or inertial measurement units (IMUs). Liquid vessel filled capacitive or optical tilt sensors may also be used. The tilt direction may be determined by gyroscopes, inertial measurement units, optical sensors, compass, alignment of position tracks from IMU and position sensor, etc. Sensors used to determine the tilt angle Φ and the tilt direction are not shown in Fig. 2. The details of tilt compensation will be familiar to a person skilled in the art.

Depending on the tilt angle as well as on the weight of the top unit 6, and/or the material properties of the rod 3, and/or the mechanical properties of the coupling between sections in a telescopic rod, there may be some bending in the rod of the surveying pole. This is illustrated in Fig. 3, which shows a surveying pole 1 with its pointing tip 11 placed on a point of interest 2. The rod 3 is bent, here with a bending point slightly above the half length of the rod 3, resulting in that the top unit 6 is more tilted than it would have been had the rod 3 been rigid. The bending shown in the figure is exaggerated for clarity of the figure. The position of the top unit 6' with a rigid rod is shown in the figure as a dotted silhouette. Because of the bending, a (tilted) longitudinal axis A determined by a tilt sensor (not shown in the figure) of the top unit 6 does not intersect the terrain at the point of interest 2, but rather at a point 21 located at an error distance 22 from the point of interest 2. In other words, in case of bending of the rod 3 of the surveying pole 1, determining the position of the point of interest 2 as described above may induce an error.

By the present inventive concept, a compensated measurement of the tilt sensor may be provided, thus enabling a more accurate positioning of the point of interest.

The general principle of the present inventive concept is shown in Figs. 4a and 5a, which depict a surveying pole 1 comprising a rod 3 extending between a first end 4 and a second end 5, wherein a top unit 6 including a tilt sensor 23 is mounted at the second end 5 of the rod 3. The surveying pole 1 further comprises a light emitting unit 24, a detector arrangement 26, and a processor 27.

The light emitting unit 24 is configured to send a collimated light beam 25 for propagation from the second end 5 to the first end 4. The detector arrangement 26 is configured to detect a position of the collimated light beam 25 at the first end 4.

Fig. 4a shows the surveying pole in an unbent state. The position 25a of the collimated light beam 25 at the first end 4, shown in Fig. 4b, corresponds to a reference position 28 illustrated by a cross.

Fig. 5a shows the surveying pole in a bent state. The position 25b of the collimated light beam 25 at the first end 4, shown in Fig. 5b, is deviated with respect to the reference position 28.

Thus, the processor 27 is configured to compare the detected position 25a, 25b with the reference position 28 and determine a deviation error representative of a bending of the rod 3 based on said comparison. The processor is further configured to obtain a position of the pointing tip 11 of the surveying pole 1 using the determined deviation error. For this purpose, the processor may be further configured to compensate a measurement of the tilt sensor 23 using the determined deviation error. The reference position 28 corresponds to a position of the collimated light beam 25 at the first end 4 for a known bending of the rod 3. In the present example, the reference position 28 corresponds to the position of the collimated light beam 25 at the first end 4 for an unbent rod.

A pointing tip 11 for placing in contact with a point of interest is mounted at the first end 4 of the rod 3.

It will be appreciated that, whereas in the present example, the light emitting unit 24 is located at the same end of the rod 3 as the top unit 6 (the light emitting unit 24 being here illustrated within the top unit 6), this is not necessarily the case. Accordingly, the light emitting unit 24 may alternatively be located at the opposite end of the rod 3 with respect to the top unit 6. Further, in the example of Figs. 4a and 5a, the detector arrangement 26 is located at the opposite end of the rod 3 with respect to the light emitting unit 24. The detector arrangement 26 may alternatively be arranged at the same end of the rod 3 as the light emitting unit 24.

Further, in the surveying pole 1 illustrated in Figs. 4a and 5a, the rod 3 is a telescopic rod 3 having a first rod section 29 and a second rod section 30, the first rod section 29 and second rod section 30 being telescopically arranged to provide length adjustment to the surveying pole 1. However, the surveying pole may also have a fixed length rod 3, such as depicted for example in Figs. 2 and 3.

Some non-limiting alternatives and embodiments of a surveying pole according to the present inventive concept will be further described below.

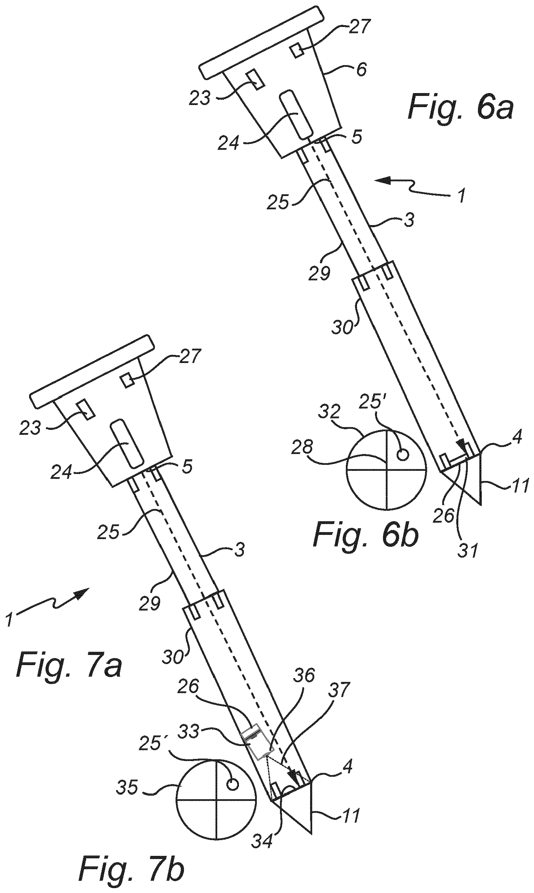

Fig. 6a illustrates a surveying pole 1 having the same features as previously described in connection to Figs. 4a and 5a. The rod 3 is bent in the same way as in Fig. 5a. In the example of Fig. 6a, the detector arrangement 26 includes an imaging device 31, which imaging device 31 is configured to detect the position of the collimated light beam 25 as a position on a pixel array 32 of the imaging device 31 at which the collimated light beam 25 impinges and created a light spot 25'. The position of the light spot 25' on the pixel array 32 is illustrated in Fig. 6b. In this example, the imaging device may more generally be a position sensor.

In an alternative example illustrated in Fig. 7a, the detector arrangement 26 includes an imaging device 33 arranged in proximity of the first end 4 for imaging a light spot 25' created by the collimated light beam 25 on a surface 34 located at the first end 4. The imaging device 33 is configured to detect the position of the collimated light beam 25 as a position of the image of the light spot 25' on a pixel array 35 of the imaging device 33, as illustrated in Fig. 7b. The imaging device 33 may be arranged at a fixed position relative to the first end 4. Furthermore, the imaging device may include a lens arrangement 36 for focussing the imaging device 33 on the surface 34.

In this example, the imaging device 33 may be a camera 33 having a field of view 37 of the surface 34. The imaging device 33 being arranged at a fixed distance of the first end 4, there is no need for refocussing and a fixed focus of the lens arrangement 36 may be used.

Thus, whereas in the example of Fig. 6a, the collimated light beam 25 impinges directly on the pixel array 32 of the imaging device 31, whereby the position of the light spot 25' on the pixel array 32 is compared to a reference position, in the example of Fig. 7a the imaging device 33 takes an image of the surface 34, whereby the position of the light spot 25' in the image is compared to a reference position. The deviation error is determined based on the comparison, as previously described.

In both the examples of Fig. 6a and Fig. 7a, the light emitting unit 24 and the respective imaging device 31, 33 are located at opposite ends of the rod 3. Corresponding alternatives in which the respective imaging device 31, 33 and the light emitting unit 24 are located at the same end of the rod 3 is also possible, for example using optical elements to guide the collimated light beam 25 accordingly.

Further, the respective detector arrangements 26 may be part of a bottom unit (not shown in Figs. 6a and 7a) comprising, in addition to the imaging device 31, 33, communication means, such as a Bluetooth unit or other type or wireless communication unit, or a cable, for communicating with, for example, the top unit 6, and/or an external control unit, and/or another instrument, such as a total station or other geodetic instrument. The bottom unit may further comprise a processor, for example for processing data obtained by the imaging device 31, 33. The processor of the bottom unit may further be configured to determine the deviation error and to determine a position of the pointing tip 11 of the surveying pole 1.

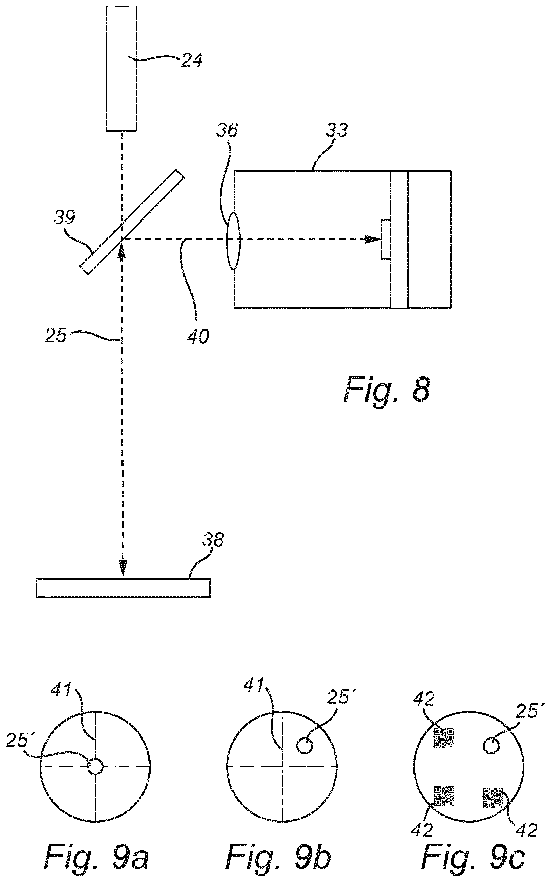

In a further example of a surveying pole according to the present inventive concept, components are arranged as schematically shown in Fig. 8. As in previously described embodiments, a light emitting unit 24 is configured to send a collimated light beam 25 for propagation from one of the first and second ends to the other end. Here, the detector arrangement includes a pattern 41, 42 (shown in Figs. 9a-c) internally arranged in the rod 3 (not shown in Fig. 8) at a surface 38 located at said other end. The detector arrangement further includes an imaging device 33 arranged to capture at least one image of said pattern 41, 42 with the collimated light beam 25 hitting the pattern 41, 42. In the example of Fig. 8, the light emitting unit 24 and the imaging device 33 are located at the same end of the rod 3, whereas the surface 38 with the pattern 41, 42 is located at the opposite end. It is envisaged that the light emitting unit 24 and the imaging device are located within the top unit 6 (not shown in Fig. 8) at the second end of the rod 3 and the surface 38 with the pattern 41, 42 is located at the first end of the rod 3, or a predetermined distance therefrom. However, the opposite is also possible, i.e., arranging the light emitting unit 24 and the imaging device 33 as part of a bottom unit located at or in proximity of the first end of the rod 3, and the surface 38 with the pattern 41, 42 located at the second end of the rod.

A beam splitter 39 is arranged between the light emitting unit 24 and the surface 38, such that the collimated light beam 25 is transmitted through the beam splitter 39, thus allowing the collimated light beam 25 to propagate from the light emitting unit 24 to the surface 38. Light reflected at the surface 38 is reflected by the beam splitter 39 towards the imaging device 33. In other words, thanks to the beam splitter 39, the imaging device 33 can capture an image of the pattern 41, 42 at the surface 38 with the collimated light beam 25 hitting the pattern 41, 42, even though the optical axis 40 of the imaging device 33 is not oriented directly towards the surface 38.

The imaging device 33 may comprise a lens arrangement 36 for focusing the imaging device 33 at the surface 38. With the configuration of Fig. 8, the lens arrangement 36 may provide variable focus, such that the imaging device 33 can focus on the surface 38 even if the distance between the surface 38 and the beam splitter 39 is varied, e.g., if the rod 3 is a telescopic rod 3, the length of which is adjusted.

Figs 9a-c are schematic representations of (parts of) images obtained by the imaging device 33. Two examples of patterns are shown in these figures: a first pattern 41 in the form of a cross is shown in Figs. 9a and 9b, and a second pattern in the form of three QR-codes distributed in a triangular pattern over a white space is shown in Fig. 9c.

The image of Fig. 9a is obtained with the rod 3 being unbent. The light spot 25' on the surface 38 created by the collimated light beam 25 hitting the pattern 41 is at the reference position, which in this case is the centre of the cross in pattern 41. With the same pattern 41, using the same reference position, i.e., the centre of the cross of the pattern 41 for an unbent rod, the light spot 25' is shifted to the upper right-hand quadrant in the image of Fig. 9b, which is obtained with a bent rod 3. The image of Fig. 9c is obtained with the same bending of the rod 3 as for Fig. 9b but the pattern 42 on the surface 38 is different. Here, the reference point for an unbent rod 3 is in the white space between the three QR-codes, at a known distance from each of the QR-codes. This shows that the reference position needs not correspond to a dark zone of the pattern, it may as well correspond to a position in a white space, with a known position with respect to the pattern.

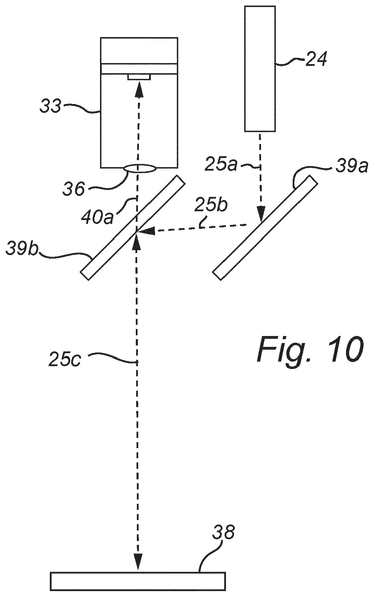

In a further example, components of the surveying pole may be arranged as shown in Fig. 10. This example is similar to that of Fig. 8, except that instead of one beam splitter arranged between the light emitting unit 24 and the surface 38, there are two optical elements between the light emitting unit 24 and the surface 38, as seen along the path of the collimated light beam 25. The path of the collimated light beam 25 is divided into three sections: a first section 25a between the light emitting unit 24 and a first optical element 39a, which may be a mirror or a beam splitter. At the first optical element 39a, the collimated light beam 25 is reflected, thus changing direction to section 25b, between the first optical element 39a and a second optical 39b being a beam splitter. Beam splitter 39b in turn reflects the collimated light beam 25 to change direction into section 25c for propagation towards the surface 38.

Light reflected at the surface 38 is transmitted by the beam splitter 39b towards the imaging device 33. In other words, the imaging device 33 can capture an image of the pattern 41, 42 at the surface 38. Images obtained by the imaging device 33 in the configuration of Fig. 10 for different patterns and different states of the rod 3 (i.e., bent or unbent) correspond to those described above in connection to Figs. 9a-c.

In the example configurations of Figs. 8 and 10, some illumination is needed for the pattern 41, 42 to be visible to the imaging device 33. Stray light from the collimated light beam 25 may be utilized to illuminate the pattern 41, 42. An additional illumination source (not shown in the figures) may be used. A hole and/or window in the rod may additionally, or alternatively, be suitable for illuminating the pattern 41, 42 (with ambient light entering the hole and/or window).

The imaging device may be configured to first capture an image of the pattern 41, 42 with the light emitting unit 24 turn off, i.e., without a collimated light beam 25, and then capture an image of the pattern 41, 42 with the light emitting unit 24 turned on, i.e., with the collimated light beam 25 hitting the pattern 41, 42.

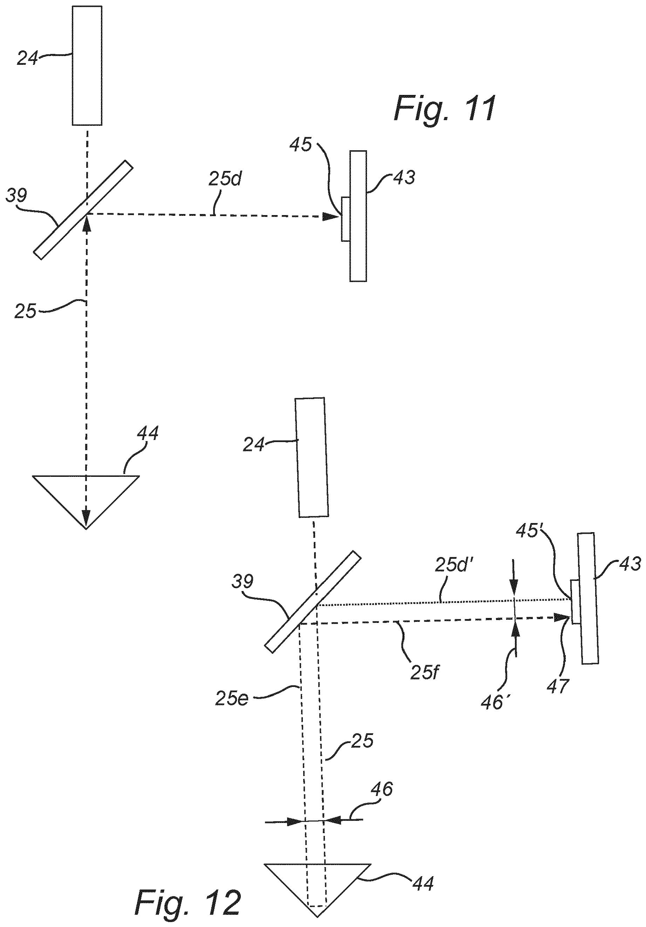

Fig. 11 shows yet another example arrangement of components within a surveying pole according to the present inventive concept. Here, the detector arrangement includes an imaging device 43 and a reflective element 44 in the form of a retroreflector 44, such as a corner cube prism. A beam splitter 39 is arranged between the light emitting unit 24, such that the collimated light beam 25 sent by the light emitting unit 24 towards the retroreflector 44 is transmitted through the beam splitter 39. The retroreflector 44 reflects the collimated light beam 25 back towards the beam splitter 39, which then reflects the collimated light beam 25 towards the imaging device 43.

The imaging device is arranged to detect the position of the collimated light beam 25 as a position on a pixel array of the imaging device at which the collimated light beam 25 reflected at the retroreflector impinges. Thus, the position of the collimated light beam 25 is detected similarly to what is described in more detail above in connection to Figs. 6a and 6b.

In Fig. 11, the rod 3 (not shown in the figure) is unbent. The collimated light beam 25 hits the retroreflector 44 at its centre and the collimated light beam 25 is therefore reflected back towards the beam splitter 39 substantially along the same optical axis. After being reflected towards the imaging device 43 at the beam splitter 39, the collimated light beam 25 propagates along axis 25d and impinges on the pixel array of the imaging device 43 at a position 45. This position 45 may be used as the reference position; in other words, the position 45 may be the reference position for a known bending of the rod 3, i.e., the unbent rod 3.

Fig. 12 illustrates the same arrangement as Fig. 11, although here the rod 3 (not shown in the figure) is bent. Consequently, the collimated light beam 25 hits the retroreflector 44 offset from the centre of the retroreflector 44, and the collimated light beam 25 is reflected back towards the beam splitter 39 in a parallel but offset axis 25e. The offset 46, corresponding to a distance 2e between the axis of the collimated light beam 25 and the offset axis 25e, is carried over after the collimated light beam 25 is reflected by the beam splitter 39 towards the imaging device 43. In other words, the collimated light beam 25 propagates from the beam splitter 39 towards the imaging device 43 along axis 25f, which is offset by offset 46' with respect to an axis 25d' corresponding to the axis 25d in the case of an unbent rod. Note that the bending of the rod is here represented by a common rotation of the light emitting unit 24, beam splitter 39, and imaging device 43 with respect to the retroreflector 44. The relative position of the light emitting unit 24, the beam splitter 39, and the imaging device 43 with respect to each other remains unchanged. For example, in embodiments where these elements are arranged within the top unit 6, this reflects the fact that no bending occurs in the top unit 6, i.e., the top unit 6 is rigid.

The offset 46' is equal to the offset 46. The position 47 at which the collimated light beam 25 impinges on the pixel array of the imaging device 43 is thus at a distance 2e from the position 45' at which the collimated light beam 25 would impinge on the pixel array of the imaging device 43 if the rod was unbent, which distance 2e corresponds to twice the deviation error e.

In the embodiment of Figs. 11 and 12, it is envisaged that the light emitting unit 24, imaging device 43, and beam splitter 39 are arranged at the second end 5 of the rod 3, optionally within the top unit 6, and the retroreflector 44 at, or in proximity of, the first end 4. As with previously described embodiments, the opposite is also possible.

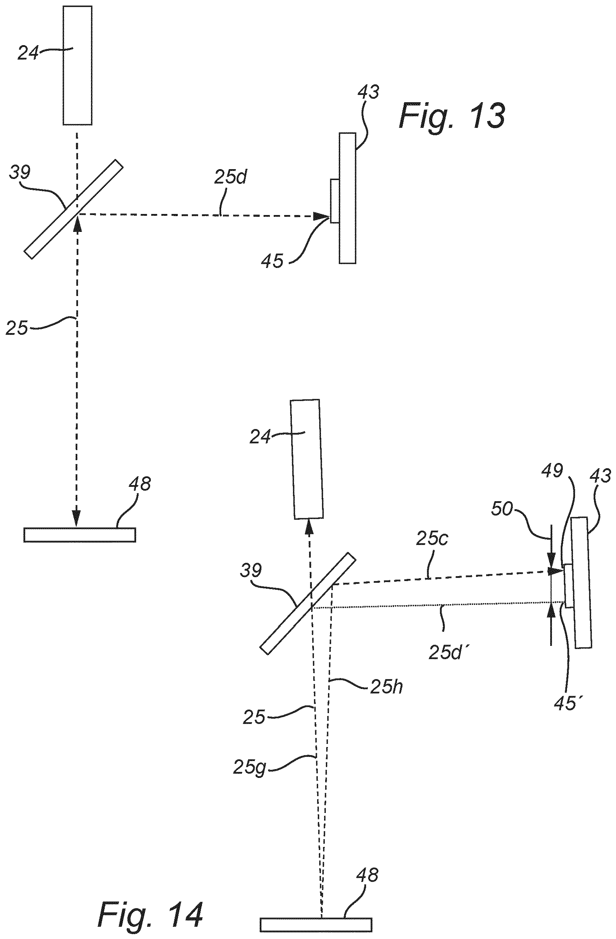

In an alternative embodiment, similar to that of Figs. 11 and 12, the retroreflector 44 is replaced by a mirror 48, as shown in Fig. 13 for an unbent rod 3 and in Fig. 14 for a bent rod 3 (the rod 3 is not shown in the Figs. 13 and 14).

As illustrated in Fig. 13, the light emitting unit 24 sends a collimated light beam 25 towards the mirror 48, which collimated light beam 25 is transmitted through the beam splitter 39. In the unbent state of the rod 3, the axis of the collimated light beam 25 hitting the mirror 48 is normal to the surface of the mirror 48. Thus, the collimated light beam 25 is reflected back towards the beam splitter 39 substantially along the same axis, to be reflected towards the imaging device 43 along axis 25d by the beam splitter 39. The collimated light beam 25 impinges on the pixel array of the imaging device 43 at position 45. This position 45 may be used as the reference position; in other words, the position 45 may be the reference position for a known bending of the rod 3, i.e., the unbent rod 3.

For the bent rod 3, as illustrated in Fig. 14, the axis 25g of the collimated light beam 25 hitting the mirror is deviated with respect to the normal of the surface of the mirror 48 by an angle $\varepsilon$ (not shown in Fig. 14). Thus, the collimated light beam 25 reflected by the mirror 48 returns towards the beam splitter 39 along axis 25h at an angle $2\varepsilon$ with respect the axis 25g. This angular offset is carried over after the collimated light beam 25 is reflected by the beam splitter 39 towards the imaging device 43. The axis 25i of the collimated light beam 25 between the beam splitter 39 and the imaging device 43 thus has an angle $2\varepsilon$ with respect to the axis 25d' corresponding to the axis 25d in the case of an unbent rod. In the same way as is described above in connection to Fig. 12, the bending of the rod is in Fig. 14 represented by a common rotation of the light emitting unit 24, beam splitter 39, and imaging device 43 with respect to the mirror 48. The relative position of the light emitting unit 24, the beam splitter 39, and the imaging device 43 with respect to each other remains unchanged. For example, in embodiments where these elements are arranged within the top unit 6, this reflects the fact that no bending occurs in the top unit 6, i.e., the top unit 6 is rigid.

The position 49 at which the collimated light beam 25 impinges on the pixel array of the imaging device 43 is at a distance 50 from the position 45' at which the collimated light beam 25 would impinge against the pixel array of the imaging device 43 if the rod was unbent. Note that the distance 50 is marked on Fig. 14 at a small distance from the pixel array of the imaging device 43 for clarity of the figure. As the angle $2\varepsilon$ is small, the distance 50 can be approximated to $2\varepsilon \cdot l$, where $l$ is the path length of the collimated light beam 25 between the mirror 48 and the pixel array of the imaging device 43. This in turn can be approximated to $2\varepsilon \cdot l \sim 2e$, i.e. twice the deviation error $e$.

In the embodiment of Figs. 13 and 14, it is envisaged that the light emitting unit 24, the imaging device 43, and the beam splitter 39 are arranged at the second end 5 of the rod 3, optionally within the top unit 6, and the mirror 48 at, or in proximity of, the first end 4. As with previously described embodiments, the opposite is also possible.

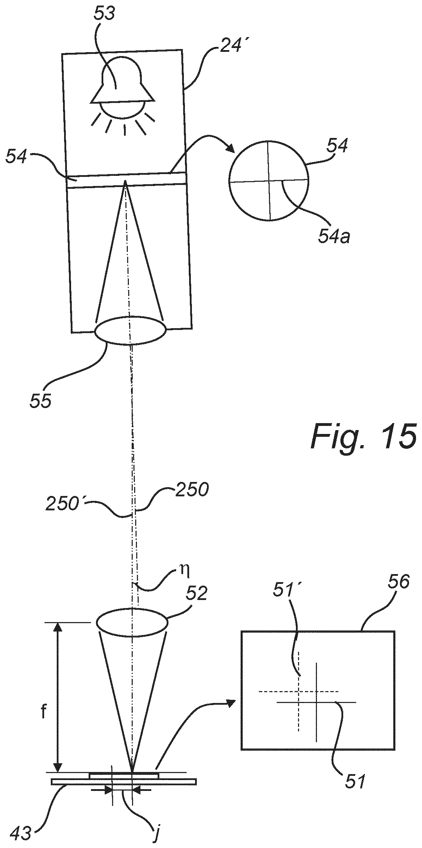

Yet another embodiment of the present inventive concept is schematically illustrated in Fig. 15. In this embodiment, the collimated light beam 250 propagating from, e.g., the second end 5 of the rod 3 to the first end 4 of the rod 3 (the rod 3 is not shown in Fig. 15) includes a light pattern. The detector arrangement includes an imaging device 43 arranged at the other end and an optical element 52 for imaging the light pattern on a pixel array of the imaging device 43. The imaging device 43 is configured to detect the position of the collimated light beam 250 as a position of an image 51, 51' of the light pattern on the pixel array.

In more detail, the light emitting unit 24' includes a light source, such as a lamp 53, an optical element 54 providing a light pattern in the light emitted from the light source 53, and an optical element 55 configured to provide the collimated light beam 250 including the light pattern for propagation from the second end 5 of the rod 3 to the first end 4 of the rod.

The optical element 54 providing the light pattern is thus an optical element 54 that controls the shape and shadow of the light emitted by the light source 53. In the example of Fig. 15, the optical element 55 comprises an opaque section 54a in the form of a cross. Areas outside of the cross 54a, i.e., the four quadrants defined by the bars of the cross 54a, light is allowed to pass through. The light pattern may thus be defined by opaque areas and transparent areas of the optical element 54. In this context, transparent can means that the area is opening of the optical element 54, or an optical window of the optical element 54 which is transparent to (at least part of) the wavelength or wavelength range of the light emitted by the light source 53, such that a light pattern is created.

The optical element 55 may be a lens. The light source 53, the optical element 54 and the optical element 55 may together act as a collimator.

The optical element 52 may be a lens of focal length $f$ arranged at a distance $f$ from the imaging device 43. This may act as a collimator. Furthermore, a sharp image of the light pattern may thus be obtained.

In Fig. 15, the rod 3 is bent. The collimated light beam 250 is represented in the figure by a line corresponding to the optical axis of the collimated light beam 250. The collimated light beam 250 is offset with respect to the optical axis 250' of the optical element 52 by an angle $\eta$. For an unbent rod 3, the optical axis of the collimated light beam 250 coincides with the optical axis 250' of the optical element 52. The image 51 of the light pattern on the pixel array of the imaging device 43, obtained with the bent rod, is offset by j with respect to the image 51' of the light pattern on the pixel array of the imaging device 43 obtained with the unbent rod. The position of the light pattern in image 51' may be used as the reference position. In this example, the offset $j$ corresponds to the distance between the center of the respective crosses in images 51 and 51'. The offset j may for example be expressed as a vector. Further, the deviation error may be expressed in a coordinate system in terms of $e_x$ and $e_y$.

Thus, the image of the light pattern moves by $j$ with bending of the rod. In this configuration, the deviation tilt angle $\eta$ is given by the relation $\eta=arctan(j/f)$.

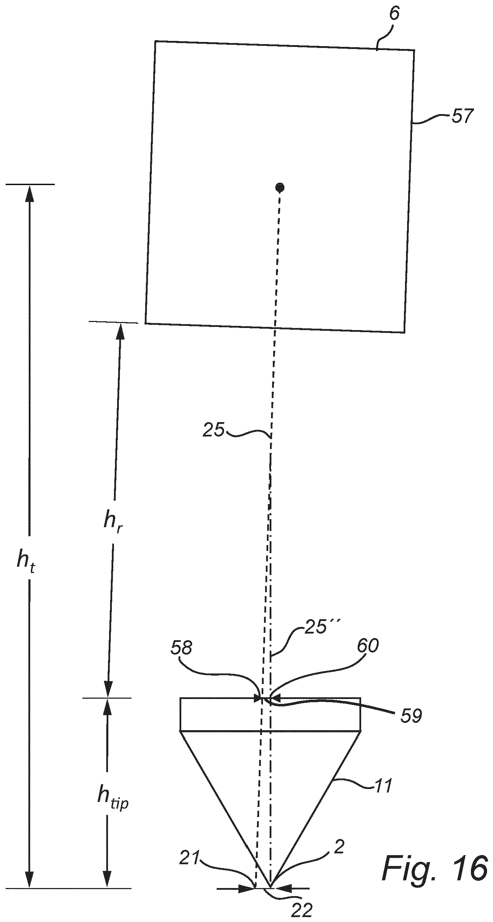

Note that in this embodiment, the deviation error $e \approx \eta * h_r$ (where $h_r$ is the rod heigh, cf. Fig. 16), i.e., the measure of the bending, is indirectly given by the position of the light pattern 51 compared to the reference position of the light pattern 51' inside the collimator. The deviation error e is thus not given by the diameter or center location of the collimated light beam 250 on the imaging device. Consequently, the collimated light beam 250 in this embodiment may be relatively wide. In contrast, in the previously described embodiments, the diameter of the collimated light beam 25 may be relatively small to form a spot.

Fig. 16 is a schematic illustration of how the deviation error *e'* at (the tip of) the pointing tip 11, i.e., the point of contact between the surveying pole 1 and the terrain, can be obtained based on the determined deviation error e. This figure shows the top unit 6 and the pointing tip 11 of the surveying pole 1. Although the rod 3 is not visible, the height $h_r$ of the rod 3, between the top unit 6 and the pointing tip 11 is shown. The pointing tip 11 has a height $h_{tip}$.

The top unit 6 has a centre point 57 of a known position (due to the known position of the positioning device (not shown in Fig. 16), which may be determined as described in connection to Fig. 1). The height of this centre point 57 above the tip is $h_t$. No details of the top unit 6 are shown in Fig. 16. However, a light emitting unit arranged within the top unit 6 is configured to send a collimated light beam 25 for propagation from the second end of the rod to the first end of the rod. Also not shown in Fig. 16 is a detector arrangement configured to detect a position of the collimated light beam 25 at the first end.

The collimated light beam 25 has a detected position 58 at the first end of the rod, the detected position 58 being at a distance 59 from the position 60 of the collimated light beam 25" at the first end of the rod if the rod was unbent (which position 60 may be used as the reference position). The distance 59 corresponds to the deviation error e.

It is assumed that no bending occurs in the top unit 6. In particular, no bending occurs within the top unit 6 between the centre point 57 and the point of exit of the collimated light beam 25 from the top unit 6. Thus, the exit of the collimated light beam 25 from the top unit 6 is known and stable, i.e., not changing when the rod is bending. The pointing tip 11 is also rigid, thus no bending occurs in the pointing tip 11.

The deviation error e' at the pointing tip 11 is shown in the figure as the distance 22 between the actual position of the point of interest 2 and the erroneous position 21 as determined without taking bending of the rod into consideration.

By geometric considerations, the deviation error *e'* at the pointing tip 11 can be determined to be

$$e' = e \cdot \frac{h_r + h_{tip}}{h_r}.$$

Note that for determining the deviation error e' at the pointing tip 11, the height $h_t$ is not needed. The location or shape of the bending of the rod is also irrelevant in determining the deviation error e and the deviation error e' at the pointing tip 11.

In the configuration of Fig. 15, the deviation error e' at the pointing tip 11 may be calculated directly with the deviation tilt angle $\eta$. As the angle $\eta$ is small, the deviation error is given by: $e' = \eta(h_r + h_{tip})$.

It will be appreciated that a deviation error at the pointing tip can be determined using similar principles in embodiments where the collimated light beam propagates from the first end of the rod to the second end.

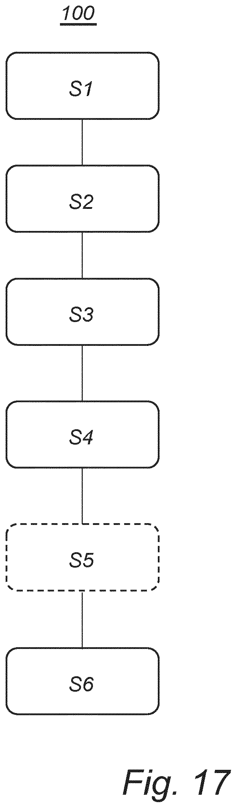

Fig. 17 shows a flow chart of a method 100 according to the present inventive concept. The method is implemented in a surveying pole comprising a rod extending between a first end and a second end. The surveying pole comprises a top unit including a tilt sensor, which top unit is mounted at one of said first and second ends.

The method comprises sending, at step S1, a collimated light beam for propagation from one of said first and second ends to the other end.

At step S2, a position of said collimated light beam at said other end is detected. This may include detecting the position of the collimated light beam as a position on a pixel array of an imaging device. Alternatively, this may include detecting the position of the collimated light beam as a position of an image of a light spot created by the collimated light beam on a pixel array of an imaging device. Alternatively, this may include detecting the position of the collimated light beam as a position at which the collimated light beam hits a pattern internally arranged in the rod. Alternatively, this may include detecting the position of the collimated light beam as a position of a light pattern on a pixel array of an imaging device.

At step S3, the detected position is compared to a reference position. The reference position corresponds to a position of the collimated light beam for a known bending of the rod. In particular, the reference position may be a position of the collimated light beam when the rod is unbent.

At step S4, a deviation error representative of a bending of the rod is determined based on the comparison performed at step S3.

At optional step S5, a measurement of the tilt sensor may be compensated using the deviation error determined at step S4.

At step S6, a position of the pointing tip of the surveying pole is obtained using the deviation error determined at step S4 and/or the compensated tilt measurement obtained at optional step S5.

The method 100 described above may provide improved accuracy to measurements performed by the surveying pole. In other words, the position of a point of interest may be more accurately determined, in case of bending of the rod.

The person skilled in the art realises that the present inventive concept by no means is limited to the preferred embodiments described above. On the contrary, many modifications and variations are possible within the scope of the appended claims. The word "comprising" does not exclude the presence of other elements or steps that those listed in the claims. The word "a" or "an" preceding an element does not exclude the presence of a plurality of such elements. Additionally, variations to the disclosed embodiments can be understood and effected by the skilled person in practicing the claimed invention, from a study of the drawings, the disclosure, and the appended claims.

## Claims

1. A surveying pole comprising:

   a rod extending between a first end and a second end, wherein a top unit including a tilt sensor is mounted at one of said first and second ends, and a pointing tip is located at the opposite end relative to the top unit,
   a light emitting unit configured to send a collimated light beam for propagation from one of said first and second ends to the other end,
   a detector arrangement configured to detect a position of said collimated light beam at said other end; and
   a processor configured to compare the detected position with a reference position and determine a deviation error representative of a bending of said rod based on said comparison, wherein the processor is further configured to obtain a position of the pointing tip of the surveying pole using the determined deviation error, wherein said reference position corresponds to a position of the collimated light beam at the other end for a known bending of said rod.

2. The surveying pole of claim 1, wherein the detector arrangement includes an imaging device arranged within said rod at said other end, wherein said imaging device is configured to detect the position of said collimated light beam as a position on a pixel array of said imaging device at which said collimated light beam impinges and creates a light spot.

3. The surveying pole of claim 1, wherein the detector arrangement includes an imaging device arranged in proximity of said other end for imaging a light spot created by said collimated light beam on a surface located at said other end, or at a predetermined distance from said other end, wherein said imaging device is configured to detect the position of said collimated light beam as a position of the image of said light spot on a pixel array of said imaging device.

4. The surveying pole of claim 3, wherein the imaging device is arranged at a fixed position relative to said other end and wherein the detector arrangement further includes a lens arrangement for focusing said imaging device on said surface.

5. The surveying pole of any one of claims 2-4, wherein the light emitting unit and the imaging device are located at opposite ends of said rod.

6. The surveying pole of claim 1, wherein the detector arrangement includes a pattern internally arranged in said rod at a surface located at said other end, or at a predetermined distance from said other end, and an imaging device arranged to capture at least one image of said pattern with said collimated light beam hitting said pattern, wherein the position of said collimated light beam is detected as a position at which the collimated light beam hits said pattern.

7. The surveying pole of claim 6, further including a lens arrangement for focusing said imaging device at said surface.

8. The surveying pole of claim 6 or 7, wherein said pattern and said light emitting unit are located at opposite ends of said rod.

9. The surveying pole of any one of claims 6-8, wherein said surface and the imaging device are located at opposite ends of said rod.

10. The surveying pole of claim 1, wherein the detector arrangement includes an imaging device and a reflecting element, wherein the reflecting element is arranged at said other end, or at a predetermined distance from said other end, for reflection of said collimated light beam towards said imaging device arranged to detect the position of the collimated light beam as a position on a pixel array of said imaging device at which the light beam reflected at said reflecting element impinges.

11. The surveying pole of claim 10, wherein the reflecting element is one of a mirror or a retroreflector.

12. The surveying pole of claim 1, wherein said collimated light beam propagating from one of said first and second ends to said other end includes a light pattern, wherein the detector arrangement includes an imaging device arranged at said other end and an optical element for imaging said light pattern on a pixel array of said imaging device, wherein the imaging device is configured to detect the position of the collimated light beam as a position of an image of the light pattern on said pixel array.

13. The surveying pole of claim 12, wherein the light emitting unit includes a light source configured to emit light, an optical element providing a light pattern in the light emitted from the light source and an optical element configured to provide said collimated light beam including said light pattern for propagation from one of said first and second ends to said other end.

14. The surveying pole of any one of the preceding claims, wherein the light emitting unit is arranged in said top unit, at said first end or at said second end.

15. The surveying pole of any one of the preceding claims, wherein the light emitting unit is a laser, such as a light emitting transmitter of an electronic measurement device (EDM) arranged within the top unit.

16. The surveying pole of any one of the preceding claims, wherein the light emitting unit is arranged to emit light along a longitudinal axis of said rod when it is unbent.

17. The surveying pole of claim 16, further comprising a beam splitter arranged along said longitudinal axis so that an imaging device of said detector arrangement is arranged to detect said collimated light beam from a direction intersecting said longitudinal axis.

18. The surveying pole of any one of the preceding claims, wherein the reference position corresponds to a position at which the light beam hits the target for said rod being unbent.

19. The surveying pole of any one of the preceding claims, wherein the rod is a telescopic pole arrangement.

20. A method implemented in a surveying pole comprising a rod extending between a first end and a second end, wherein a top unit including a tilt sensor is mounted at one of said first and second ends, and a pointing tip is located at the opposite end relative to the top unit, said method comprising:

sending a collimated light beam for propagation from one of said first and second ends to the other end;
detecting a position of said collimated light beam at said other end;
comparing the detected position with a reference position;
determining a deviation error representative of a bending of said rod based on said comparison; and
obtaining a position of the pointing tip of the surveying pole using the determined deviation error, wherein said reference position corresponds to a position of the collimated light beam at the other end for a known bending of said rod.

Fig. 1

Fig. 2

Fig. 3

Fig. 4a

Fig. 4b

Fig. 5a

Fig. 5b

Fig. 6a

Fig. 6b

Fig. 7a

Fig. 7b

Fig. 8

Fig. 9a          Fig. 9b          Fig. 9c

*Fig. 10*

*Fig. 11*

*Fig. 12*

Fig. 13

Fig. 14

Fig. 15

*Fig. 16*

_100_

```
┌──────────────┐
│      S1      │
└──────────────┘
       │
┌──────────────┐
│      S2      │
└──────────────┘
       │
┌──────────────┐
│      S3      │
└──────────────┘
       │
┌──────────────┐
│      S4      │
└──────────────┘
       │
┌ ─ ─ ─ ─ ─ ─ ─┐
│      S5      │
└ ─ ─ ─ ─ ─ ─ ─┘
       │
┌──────────────┐
│      S6      │
└──────────────┘
```

_Fig. 17_

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br>A | US 2017/176185 A1 (MAAR HANNES [AT] ET AL)<br>22 June 2017 (2017-06-22)<br>* paragraphs [0020], [0040]; claim 1;<br>figure 5a *<br>----- | 1-5,10,<br>11,14-20<br>6-9,12,<br>13 | INV.<br>G01C15/00<br>G01B11/27 |
| Y | CN 110 260 813 A (UNIV XIAN TECHNOLOGY)<br>20 September 2019 (2019-09-20)<br>* the whole document *<br>----- | 1-5,10,<br>11,14-20 | |
| Y | RU 2 224 980 C2 (KAZENNOE PREDPRIJATIE<br>"TSENTRAL'NOE KONSTRUKTORSKOE BJURO<br>"ARSENAL") 27 February 2004 (2004-02-27)<br>* the whole document *<br>----- | 10,11,17 | |

TECHNICAL FIELDS
SEARCHED (IPC)

G01B
G01C

The present search report has been drawn up for all claims

| Place of search | Date of completion of the search | Examiner |
|---|---|---|
| The Hague | 26 July 2024 | Chapple, Ian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 9088

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2024

| Patent document cited in search report | Publication date | Patent family member(s) | Publication date |
|---|---|---|---|
| US 2017176185 A1 | 22-06-2017 | CN 106959450 A<br>EP 3182066 A1<br>US 2017176185 A1 | 18-07-2017<br>21-06-2017<br>22-06-2017 |
| CN 110260813 A | 20-09-2019 | NONE | |
| RU 2224980 C2 | 27-02-2004 | RU 2224980 C2<br>UA 38880 C2 | 27-02-2004<br>15-01-2004 |

EPO FORM P0459

For more details about this annex : see Official Journal of the European Patent Office, No. 12/82